Europäisches Patentamt

European Patent Office

Office européen des brevets

(11) Veröffentlichungsnummer: **0 092 175**
A2

## (12) EUROPÄISCHE PATENTANMELDUNG

(21) Anmeldenummer: 83103611.6

(22) Anmeldetag: 14.04.83

(51) Int. Cl.³: **H 04 N 1/036**

(30) Priorität: 20.04.82 DE 3214583

(43) Veröffentlichungstag der Anmeldung: 26.10.83
Patentblatt 83/43

(84) Benannte Vertragsstaaten: **BE DE FR GB IT NL**

(71) · Anmelder: **International Standard Electric Corporation, 320 Park Avenue, New York New York 10022 (US)**

(84) Benannte Vertragsstaaten: **BE FR GB IT NL**

(71) Anmelder: **Standard Elektrik Lorenz Aktiengesellschaft, Hellmuth-Hirth-Strasse 42, D-7000 Stuttgart 40 (DE)**

(84) Benannte Vertragsstaaten: **DE**

(72) Erfinder: **Prohaska, Peter, Peyerstrasse 20, D-8500 Nürnberg 80 (DE)**

(74) Vertreter: **Hösch, Günther, Dipl.-Ing. et al, c/o Standard Elektrik Lorenz AG Patent- und Lizenzwesen Kurze Strasse 8 Postfach 300 929, D-7000 Stuttgart 30 (DE)**

(54) Elektrooptische Vorrichtung.

(57) Die Erfindung befaßt sich mit dem Problem der Justierung der optisch wirksamen Systeme zur insbesondere zeilenweisen Ausgabe von Bildinformationen einer elektrooptischen Vorrichtung für Faksimile-Schreibeinrichtungen, Fernkopierer etc. Sie besteht aus einem elektrisch steuerbaren elektrooptischen Substrat aus lichtdurchlässigem elektrooptischem Material, wobei der optische Effekt durch Anlegen einer Spannung zwischen zwei auf dem Substrat benachbart angeordneten Steuerelektroden gesteuert wird. Erfindungsgemäß ist das Substrat (1) in einem rahmenartigen Gehäuse (17) senkrecht zur Längserstreckung justierbar angeordnet. Zur Einstrahlung des Lichtes von einer Lichtquelle (37) her ist ein Licht-Querschnittswandler (36) vorgesehen, der mittels eines Kreuzsupports in zwei Richtungen, senkrecht zueinander, verschiebbar angeordnet ist. Hierdurch können die Lichtzeichen des Substrats (1) und die Lichtzeile des Licht-Querschnittswandlers (36) genau parallel zueinander justiert werden.

P.Prohaska 7

## Elektrooptische Vorrichtung

Die vorliegende Erfindung bezieht sich auf eine elektrooptische Vorrichtung für eine Faksimile-Schreibeinrichtung, Fernkopierer etc., zur insbesondere zeilenweisen Ausgabe von Bildinformation mit einem elektrisch steuerbaren elektrooptischen Substrat aus lichtdurchlässigem elektrooptischem Material, wobei der optische Effekt durch Anlegen einer Spannung zwischen zwei auf dem Substrat benachbart angeordneten Steuerelektroden gesteuert wird.

Bei derartigen Vorrichtungen müssen die verschiedenen optischen Einheiten genau zueinander justiert sein. Die vorliegende Erfindung befaßt sich daher mit dem Problem, diese Justierungen mit einfachen Mitteln sehr genau vornehmen zu können.

Gelöst wird diese Aufgabe dadurch, daß das Substrat in einem rahmenartigen Gehäuse senkrecht zur Längserstreckung justierbar angeordnet ist. Hierdurch kann die elektrooptische Lichtzeile genau parallel zu und über oder hinter einer vorgegebenen Zeile ausgerichtet werden.

Weiterhin hat die Erfindung Lösungen zum Inhalt, die weiteren erforderlichen optischen Systeme justieren zu können. Diese Lösungen können auch unabhängig von der Möglichkeit der Justierung des Substrats verwendet werden. Die Lösungsmerkmale ergeben sich aus den Unteransprüchen und der Beschreibung.

*2*

P.Prohaska 7

Weitere vorteilhafte Einzelheiten der Erfindung sind nachfolgend anhand der in der Zeichnung veranschaulichten Ausführungsbeispiele beschrieben.

Es zeigen:

Fig. 1 einen Ausschnitt aus einem Substrat mit den erfindungsgemäßen Elektroden in einer Draufsicht, beispielsweise von oben,

Fig. 2 dasselbe von unten,

Fig. 3 eine Seitenansicht gemäß dem Schnitt A-B der Fig. 2,

Fig. 4 eine schematische Darstellung eines Wirkungsschemas,

Fig. 5 eine grafische Darstellung der Abhängigkeit der Lichtintensität von der Steuerspannung bei verschiedenem Potential der Zusatzelektrode,

Fig. 6 eine Seitenansicht mit einem Teil einer Trommel mit einer fotoleitfähigen Schicht,

Fig.7 eine Kontaktierungsmöglichkeit des Substrats der erfindungsgemäßen Vorrichtung in perspektivischer Sicht,

Fig.8 eine vergrößerte Darstellung einer erfindungsgemäßen Schreibeinheit,

ꞵ

P.Prohaska 7

Fig. 9 die Vorrichtung in einer Schreibeinrichtung, z.B.
einem Fernkopierer, mit einem Licht-Querschnittswandler gemäß dem Schnitt C-D der Fig. 10,

Fig.10 den Licht-Querschnittswandler der Schreibeinrichtung in perspektivischer Ansicht,

Fig.11 den Licht-Querschnittswandler der Schreibeinrichtung in einer Draufsicht,

Fig.12 eine verwendete Fokusiereinheit und

Fig.13 einen Kreuzsupport für den Licht-Querschnittswandler.

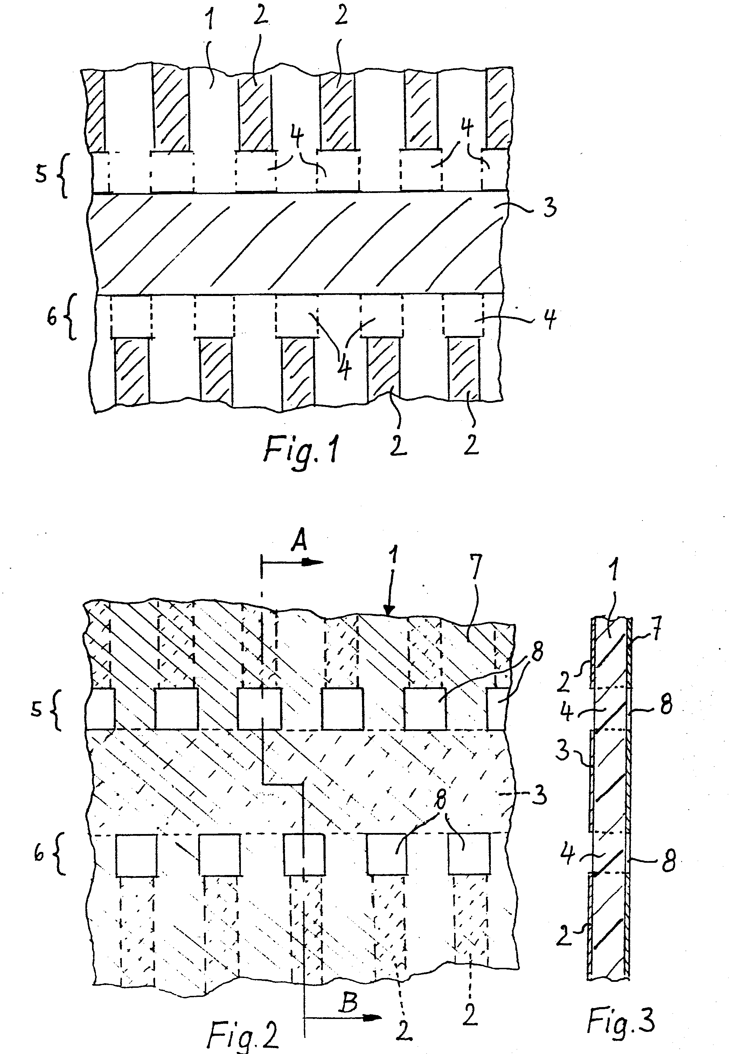

In Fig. 1 ist mit 1 ein Substrat aus elektrooptischem
Material bezeichnet, das die Eigenschaft hat, daß bei
Anlegen einer Spannung zwischen zwei im Abstand voneinander
benachbarten Steuerelektroden 2 und 3 in dem dazwischen
vorhandenen Bereich 4 die optischen Eigenschaften verändert werden. Ein bekanntes Material hierfür ist licht-
durchlässiges Blei-Lanthan-Zirkonat-Titanat, das bekanntlich doppelbrechende Eigenschaften aufweist.

Beim gezeigten Ausführungsbeispiel ist eine Vielzahl von
Bereichen 4 in zwei Teilzeilen 5 und 6 vorgesehen, die
zusammen, auf eine Zeile projiziert, eine kontinuierliche
Zeile ergeben. Die Aufteilung in zwei Teilzeilen 5, 6
ermöglicht eine sehr feine Unterteilung einer Zeile in
sehr schmale Lichtpunkte (Bereiche 4), die trotzdem

4

P.Prohaska 7

gut einzeln kontaktiert werden können, ohne daß die Elektrodenbreite der Steuerelektroden 2 sehr dünn gemacht werden muß. Hierdurch erhält man eine hohe Sicherheit gegen einen Spannungsüberschlag von einer Steuerelektrode 2 zur benachbarten und eine hohe Strombelastbarkeit.

Die zweite Steuerelektrode 3 ist als streifenförmige Mittelelektrode ausgebildet und daher allen Bereichen 4 gemeinsam.

Erfindungsgemäß ist entsprechend Fig. 2 und 3 auf der den Steuerelektroden 2, 3 gegenüberliegenden Seite des Substrats 1 eine Zusatzelektrode 7 für jeden Bereich 4 vorgesehen, die beim Ausführungsbeispiel als allen Bereichen 4 gemeinsame Flächenelektrode mit den Bereichen 4 entsprechend geformten fensterförmigen Aussparungen 8 ausgebildet ist.

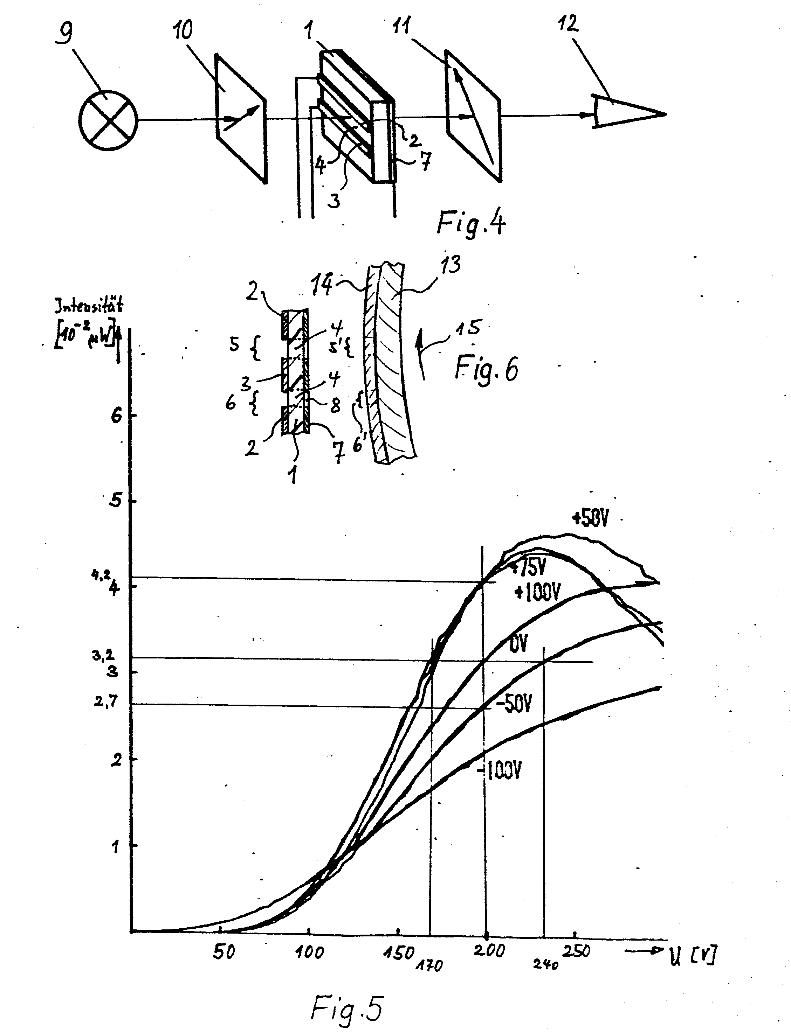

Die Wirkungsweise der elektrooptischen Vorrichtung ist nachfolgend anhand der Fig. 4 bis 6 erläutert.

Gemäß dem Wirkungsprinzip der Fig. 4 ist nach einer Lichtquelle 9 ein Polarisationsfilter 10 vorgesehen, auf das die elektrooptische Vorrichtung bestehend aus dem Substrat 1, den Steuerelektroden 2, 3 und der Zusatzelektrode 7, folgt. Die Zusatzelektrode 7 ist mit einer nicht sichtbaren Aussparung 8 versehen. Nach diesem ist ein zweites Polarisationsfilter 11 angebracht, das gegenüber dem ersten um 90 $^\circ$ in der Phase gedreht ist, so daß bei normaler Belichtung kein Licht hindurchgelassen wird. Anschließend an das Polarisationsfilter 11 ist ein strahlungs-, insbesondere lichtempfindliches Element 12 bei einem elektrostatischen Drucker also z.B. ein Träger mit einer

*5*

P.Prohaska 7

Selen-, Cadmium- oder Siliziumschicht, die ggfs. noch
entsprechend dotiert sein können, vorgesehen.

Wird nun an die Steuerelektroden 2, 3 eine Spannung von
beispielsweise 200 V Gleichspannung angelegt, so wird
das durchfallende polarisierte Licht in seiner Phase gedreht, so daß es durch das zweite Polarisationsfilter hindurchtritt und das lichtempfindliche Element 12 an einer
bestimmten Stelle belichtet.

Die Durchlässigkeit bei einer bestimmten Lichtstärke ist
im Diagramm der Fig. 5 bei einer Spannung von Null V an
der Zusatzelektrode 7 ersichtlich. Legt man nun an die
Zusatzelektrode 7 eine Spannung an, so ändert sich die
Lichtdurchlässigkeit gemäß den angegebenen Kurven. Wie
ersichtlich, kann daher durch diese erfindungsgemäßen
Maßnahmen die am Empfänger, d.h. am lichtempfindlichen
Element 12 vorhandene Lichtintensität in einfacher Weise
in einem relativ weiten Bereich geändert werden, ohne daß
die Steuerspannung an den Steuerelektroden 2, 3 verändert
werden muß. Es ist daher bei gleicher Intensität möglich,
z.B. die Steuerspannung von 200 auf 170 V zu senken,
wenn an die Zusatzelektrode 7 eine Gleichspannung von
+50 bis +100 V angelegt wird. Dies bedeutet eine wesentliche Senkung der notwendigen Steuerströme und auch die
Überschlagsgefahr zwischen zwei benachbarten Steuerelektroden 2 (Fig. 1 bis 3) wird vermindert bzw. diese Steuerelektroden können näher zusammengerückt werden und damit
kann eine noch feinere Unterteilung der einzelnen Bildpunkte bzw. Bereiche 4 erzielt werden.

P.Prohaska 7

Das Anlegen einer negativen Spannung an die Zusatzelektrode 7 verringert die Intensität. Es ist also ersichtlich, daß eine erfindungsgemäße elektrooptische Vorrichtung in großem Maß an erforderliche Gegebenheiten angepaßt werden kann.

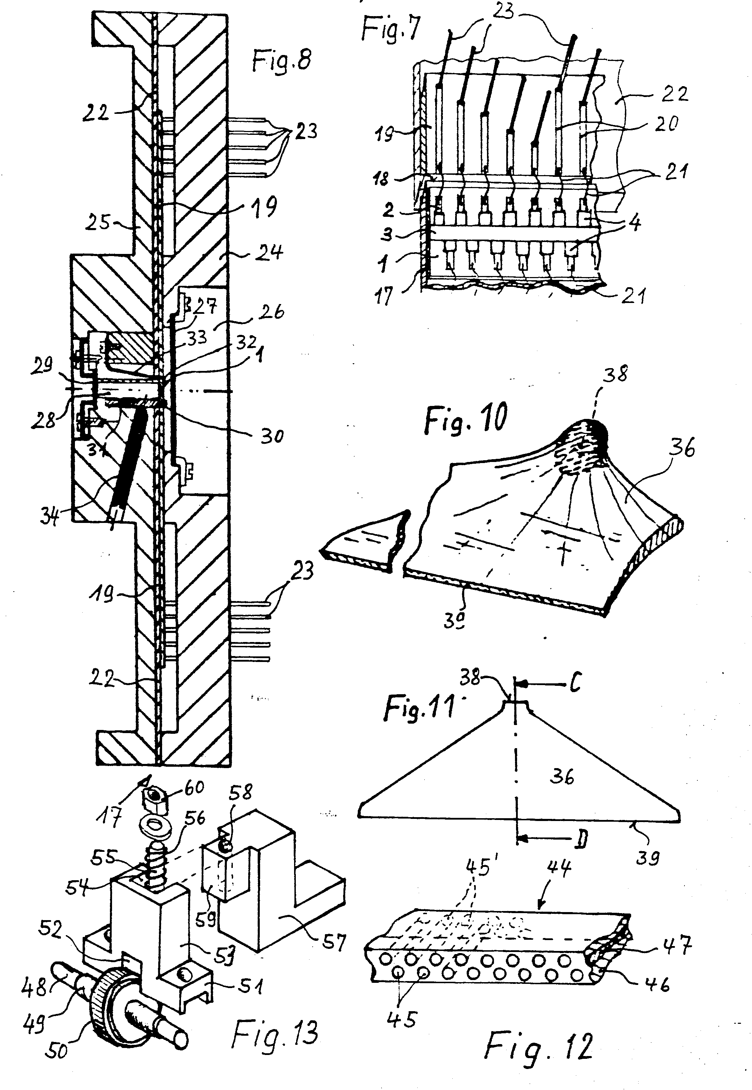

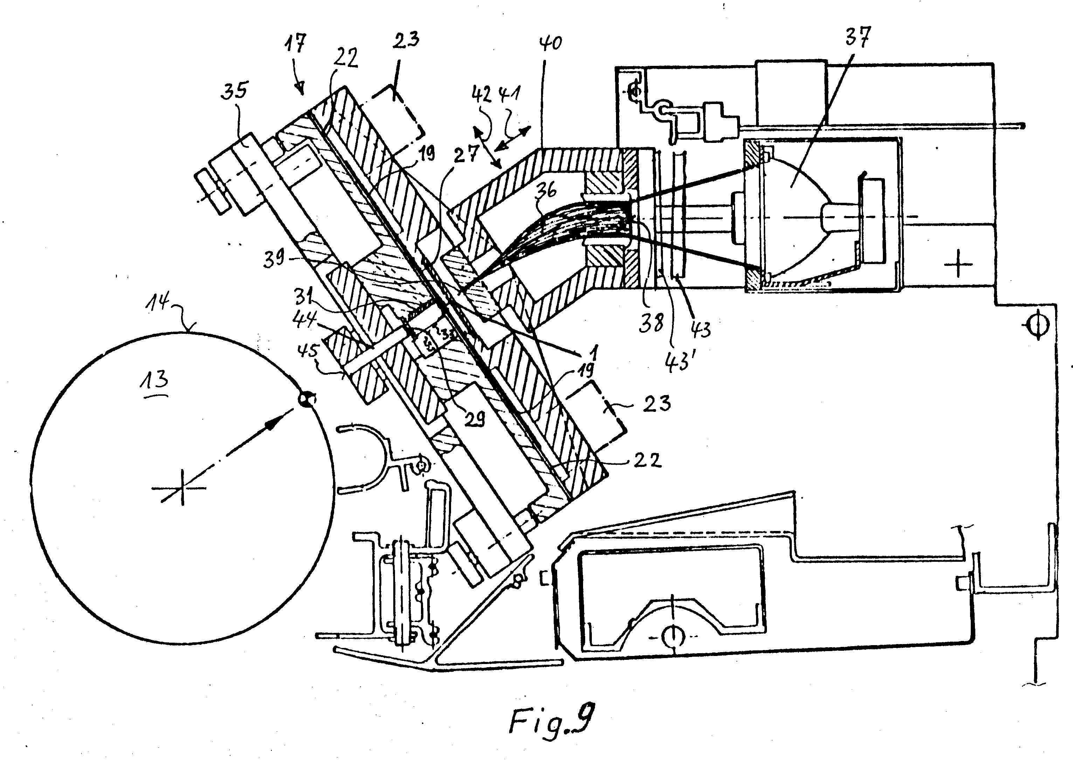

Anhand der Fig. 6 sei kurz die Wirkungsweise der versetzten Bereiche 4 einer in zwei Teilzeilen 5, 6 aufgeteilten Lichtzeile beschrieben. Als lichtempfindliches Element 12 ist hier der Abschnitt einer Trägertrommel 13 mit einer strahlungsempfindlichen Schicht 14 vorgesehen. Die Trommel 13 drehe sich in Richtung des Pfeiles 15. Zum Schreiben einer Zeile werden zunächst die einzelnen Bereiche 4 der Teilzeile 6 durch kurzzeitiges Anlegen einer Steuerspannung an die untere Steuerelektrode 2 und die gemeinsame Steuerelektrode 3 aktiviert, so daß auf der Trägertrommel 13 die Schicht 14 in einer Teilzeile 6' belichtet und z.B. entladen wird. Nach Drehung der Trägertrommel 13 in Pfeilrichtung 15 wird die Teilzeile 5 durch kurzzeitiges Anlegen einer Steuerspannung an die obere Steuerelektrode 2 und die Mittelelektrode 3 dann aktiviert, wenn sich die belichtete Teilzeile 6' vor den Bereichen 4 der Teilzeile 5 befindet. Es wird dann eine Teilzeile 5' zwischen die Teilzeile 6' eingeschrieben. Die beiden Teilzeilen 5, 6 bzw. 5', 6' werden daher in eine Zeile geschrieben. Dadurch, daß zwischen den Bereichen 4 kein elektrischer Anschluß vorhanden sein muß, können diese Bereiche 4 der Teilzeilen 5', 6' unmittelbar aneinander geschrieben werden. Man erhält also eine sehr gute Auflösung.

Bei einer konstruktiven Ausführung sind zweckmäßig die Steuerelektroden 2 senkrecht zur Mittelelektrode 3 vorgesehen.

P.Prohaska 7

Das Substrat 1 ist gemäß Fig. 7 zweckmäßig auf einem durchsichtigen Träger 16 befestigt, der in einem geeigneten Rahmen 17 (Fig. 7 und 8) justierbar eingesetzt ist. Anschließend an die Längskanten 18 des Trägers 16 ist beiderseits eine Schaltungsplatte 19 mit Leiterbahnen 20 vorgesehen. Die den Längskanten 18 zugewandten Enden der Leiterbahnen 20 sind jeweils mit der gegenüberstehenden Steuerelektrode 2 durch eine dünne, beiderseits angebondete Verbindungsleitung 21, z.B. einem Golddraht, verbunden. Die Schaltungsplatte 19 kann ihrerseits auf einem Träger 22 befestigt sein, der ebenfalls im Rahmen 17 angebracht ist. Träger 16 und Träger 22 können auch einen gemeinsamen Träger bilden.

Die Leiterbahnen 20 besitzen zweckmäßig unterschiedliche Längen. Dies geschieht vorteilhaft dadurch, daß eine bestimmte Anzahl, z.B. fünf, aufeinanderfolgende Leiterbahnen 20, von einer Grundlänge ausgehend, stufenweise kürzer sind. An den Enden können dann Anschlußkontakte 23, beispielsweise Löt- oder Steckkontakte befestigt sein, die vorzugsweise senkrecht von der Schaltungsplatte 19 abstehen.

Die Anordnung der Vorrichtung gemäß Fig. 7 ist in einem Rahmen 17 in Fig. 8 im Querschnitt dargestellt. Der bei einem Ausführungsbeispiel etwa 15 cm breite und 40 cm lange Rahmen 17 besteht aus zwei rahmenartigen Platten 24 und 25 oder zu einem Rahmen zusammengesetzten Platten 24, 25, von denen die rechts dargestellte eine relativ große Mittelöffnung 26 mit einem Polarisationsfilter 27 und die links dargestellte eine kleinere spaltartige Öffnung 28 mit

8

P.Prohaska 7

einem zweiten, zum ersten um 90° in der Phase versetzt angeordneten Polarisationsfilter 29 besitzt. Die Platten bzw. Plattenteile 24, 25 sind miteinander verschraubt.

Das Substrat 1 ist im Rahmen in Richtung der Substratebene justierbar. Dies geschieht hier dadurch, daß eine Längskante 18 des Substrats 1 oder eines etwa vorhandenen Trägers 16 in einer Längsnut 30 einer sich über die Länge des Rahmens 17 erstreckenden Justierleiste 31 eingesetzt ist. Die gegenüberliegende Längskante 18 ist z.B. in einer Kralle 32 einer als Blattfeder ausgebildeten Druckfeder 33 gehaltert. Die Verstellung erfolgt über eine Justierschraube 34, von denen über die Länge des Substrats 1 wenigstens zwei vorhanden sind, die dann vorzugsweise im Endbereich derselben angeordnet sind und über die Justierleiste 31 einwirken. Bei dieser Art der Halterung des Substrats 1 wird kein Träger 16 benötigt.

Da ein Substrat 1 nicht beliebig lang herstellbar ist, andererseits jedoch für einen Drucker z.B. zum Drucken einer Zeile einer DIN A 4 Seite die Lichtzeile wenigstens 18 bis 20 cm lang sein muß, werden mehrere Substrate 1 nebeneinander angeordnet. Je Substrat 1 sind dann zwei Druckfedern 33 und zwei Justierschrauben 34 und eine Justierleiste 31 vorgesehen.

Vorteilhaft können mehrere Justierleisten 31 zu einer gemeinsamen Leiste zusammengefaßt sein und diese ist im Bereich des Trennstoßes zwischen zwei angrenzenden Substraten 1 mit einem Einschnitt versehen, so daß mehrere leichtbewegliche zusammenhängende Teilleisten entstehen, deren Längen

**P.Prohaska 7**

jeweils etwa derjenigen eines Substrats 1 entspricht. Die Justierleisten 31 bestehen vorteilhaft aus elastischem Material, z.B. einem geeigneten Kunststoff.

Eine erfindungsgemäße Schreibeinrichtung mit der beschriebenen elektrooptischen Vorrichtung zeigt die Fig. 9. Der Rahmen 17 ist hier auf einem Träger 35 angebracht. Oberhalb des ersten Polarisationsfilters 27 ist ein Licht-Querschnittswandler 36 für ein von einer Lichtquelle 37 fokusiert auf eine Einstrahlfläche 38 des Licht-Querschnittswandlers 36 auftreffenden Lichtstrahlbündel vorgesehen. Der Licht-Querschnittswandler 36 setzt die kreisförmige Lichtfläche 38 in eine Lichtzeile 39 um. In den Fig. 10 und 11 ist der Licht-Querschnittswandler genauer dargestellt. Es ist ersichtlich, daß die kreisförmige Einstrahlfläche 38 in eine Leuchtzeile 39 umgebildet wird. Der Licht-Querschnittswandler 36 kann aus einem Spritzteil aus lichtdurchlässigem Kunststoff bestehen. Vorteilhaft besteht er aus einem geeignet geformten Glasfaserbündel. Dieses besitzt kleine Übertragungsverluste und kann höheren Temperaturen ausgesetzt werden als ein Kunststoffspritzteil.

Der Licht-Querschnittswandler 36 ist in einem Gehäuse 40 untergebracht. Dieses ist mittels geeigneter mechanischer Bauelemente in Richtung zum Polarisationsfilter 27 und damit dem Substrat 1 und quer zur Zeilenrichtung verstellbar und justierbar angebracht (Pfeile 41 und 42). Hierdurch kann es genau parallel zur Substratzeile bzw. den Substrat-Teilzeilen 5, 6 ausgerichtet werden und durch Verschieben in Richtung des Pfeils 41 kann die zu übertragende Lichtintensität variiert werden. Eine zweckmäßige Anordnung zur

*10*

P.Prohaska 7

Veränderung der Lage ist später anhand der Fig. 13 beschrieben.

Zwischen der Lichtquelle 37 und der Einstrahlfläche 38 ist wenigstens ein Wärmefilter 43 vorgesehen. Zusätzlich können Filter 43' vorgesehen sein, die nur die gewünschte Wellenlänge bzw. einen gewünschten Wellenlängenbereich, auf die bzw. den beispielsweise die lichtempfindliche Schicht 14 der Trägertrommel 13 besonders günstig reagiert, durchlassen bzw. durchläßt.

Unterhalb des zweiten Polarisationsfilters 29 ist eine selbstfokusierende Lichtleitereinrichtung 44 angebracht. Diese richtet die von den Bereichen 4 durchgesteuerten Lichtstrahlen parallel, so daß sie stark gebündelt auf der in geringem Abstand von der Ausgabefläche 45 angeordneten Schicht 14 der Trägertrommel 13 auftrifft und einen scharf begrenzten Punkt liefert.

In Fig. 12 ist die Lichtleitereinrichtung 44 schematisch in perspektivischer Ansicht dargestellt. Sie besteht im wesentlichen aus einem Traggerüst 46 mit darin parallel zueinander angeordneten Lichtleiterstäbchen 47. Letztere sind derart gegeneinander versetzt angeordnet, daß die Eingabeflächen 45' und die Ausgabeflächen 45 im gleichen Muster angebracht sind wie die Bereiche 4 des Substrats 1. Die Lichtleiterstäbchen 47 bestehen zweckmäßig aus einer sogenannten Gradienten-Lichtleitfaser. Diese besitzt durch Dotieren oder geeignete Wärmebehandlung in einer besonderen Atmosphäre von innen nach außen einen kontinuierlich

//

P.Prohaska 7

abnehmenden Brechungsindex. Geeignet sind natürlich auch andere Lichtleiterstäbchen mit stufenweise sich änderndem Brechungsindex.

Ein für die Justierung des Licht-Querschnittswandlers 36 geeigneter Kreuzsupport ist in Fig. 13 dargestellt. Der Licht-Querschnittswandler 36 ist mit zwei derartigen, an den längsseitigen Enden des Gehäuses 40 angeordneten Kreuzsupporten befestigt. Letzterer besteht aus einer Achse 48 mit einem Feingewinde 49, auf dem ein Rändelrad 50 verstellbar ist. Die Achse 48 ist z.B. am Rahmen 17 starr be-festigt. Über der Achse 48 ist ein Führungsblock 51 vorgesehen. Dieser besitzt unten einen Schlitz 52 in der Breite der Dicke des Rändelrades 50. Im senkrechten Schaft 53 des Führungsblocks 51 ist in einer Führungsnut 54 ein Gewindebolzen 55 angebracht, über den eine Schrauben-Druckfeder 56 geschoben ist. Auf diesen ist ein Verstellblock 57 mittels der Öffnung 58 seines Führungsansatzes 59 aufsteckbar und mittels einer Stellmutter 60 in seiner Lage fixierbar. Am Verstellblock 57 ist das Gehäuse 40 des Licht-Querschnittswandlers 36 befestigt. Durch Drehen des Rändelrades 50 kann das Gehäuse 40 in Richtung des Pfeiles 42 und durch Verdrehen der Stellmutter 60 in Richtung des Pfeiles 41 verstellt werden. Durch die beiden an den Längsenden des Gehäuses 40 vorgesehenen Kreuzsupporte kann eine genaue parallele Ausrichtung der Leuchtzeile 39 zu der Zeile bzw. den Teilzeilen 5, 6 des Substrats 1 erreicht werden.

P.Prohaska 7

Patentansprüche

1. Elektrooptische Vorrichtung für eine Faksimile-Schreibeinrichtung, Fernkopierer etc., zur insbesondere zeilenweisen Ausgabe von Bildinformationen mit einem elektrisch steuerbaren elektrooptischen Substrat aus lichtdurchlässigem,
elektrooptischem Material, wobei der optische Effekt durch
Anlegen einer Spannung zwischen zwei auf dem Substrat benachbart angeordneten Steuerelektroden gesteuert wird,
d a d u r c h   g e k e n n z e i c h n e t, daß das Substrat (1) in einem rahmenartigen Gehäuse (17) senkrecht
zur Längserstreckung justierbar angeordnet ist.

2. Vorrichtung nach Anspruch 1, dadurch gekennzeichnet,
daß das Substrat (1) an einer Längskante (18) senkrecht
zur Längserstreckung federnd gelagert ist und die gegenüberliegende Längskante (18) in einer Nut (30) eines einstellbaren Justiergliedes (31) gelagert ist.

3. Vorrichtung nach Anspruch 2, dadurch gekennzeichnet,
daß eine Blatt-Druckfeder (33) vorgesehen ist, deren federnder Arm eine Kralle (32) aufweist, in der die Längskante
(18) des Substrats (1) gehaltert ist.

ZT/P21/Hs/rk
19.04.1982

P.Prohaska 7

4. Vorrichtung nach einem der Ansprüche 1 bis 3, dadurch gekennzeichnet, daß das Justierglied aus einer Leiste (30) besteht.

5. Vorrichtung nach einem der Ansprüche 1 bis 4, dadurch gekennzeichnet, daß bei Anordnung mehrerer Substrate (1) zu einem Streifen eine gemeinsame Leiste (30) aus insbesondere elastischem Material vorgesehen ist.

6. Vorrichtung nach Anspruch 5, dadurch gekennzeichnet, daß die Leiste (30) an den Trennstellen zweier Substrate (1) mit einem Querschlitz versehen ist und jeder Leistenabschnitt durch zwei Justierschrauben (34) einstellbar ist.

7. Vorrichtung nach einem der Ansprüche 1 bis 6, dadurch gekennzeichnet, daß vor und hinter dem Substrat (1) ein Polarisationsfilter (27, 29) vorgesehen ist, die gegeneinander um 90° in der Phase versetzt angeordnet sind.

8. Vorrichtung nach einem der Ansprüche 1 bis 7, dadurch gekennzeichnet, daß an der Lichtaustrittsseite eine aus einer Vielzahl von Lichtleitstäbchen (47) bestehende selbstfokosierende Lichtleitereinrichtung (44) vorgesehen ist.

9. Vorrichtung nach dem Oberbegriff des Anspruchs 1, insbesondere nach einem der Ansprüche 1 bis 8, dadurch gekennzeichnet, daß auf dem Substrat (1) in einer Zeile angeordnete elektrooptische Bereiche (4) vorgesehen sind und jeweils aufeinanderfolgende Bereiche (4) in parallel zueinander verlaufenden Zeilen (5, 6) angeordnet sind und daß je Bereich (4) ein Lichtleitstäbchen (47) in einem Traggerüst (46) angeordnet und die im Muster der Bereiche (4) vorgesehenen Eingabeflächen (45') der Lichtleitstäbchen (47) den Bereichen (4) zugekehrt sind.

P.Prohaska 7

10. Vorrichtung nach einem der Ansprüche 1 bis 9 , dadurch gekennzeichnet, daß zwischen Lichtquelle (37) und dem ersten Polarisationsfilter (27) wenigstens ein Wärmefilter (43) angeordnet ist.

11. Vorrichtung nach einem der Ansprüche 1 bis 10, dadurch gekennzeichnet, daß zwischen Lichtquelle (37) und dem ersten Polarisationsfilter (27) ein Filter (43') vorgesehen ist, das bevorzugt denjenigen Wellenbereich durchläßt, für den die lichtempfindliche Schicht (14) besonders empfindlich ist.

12. Vorrichtung nach einem der Ansprüche 1 bis 11, dadurch gekennzeichnet, daß zwischen Wärme- und/oder Wellenlängenfilter (43, 43') ein Licht-Querschnittswandler (36) vorgesehen ist.

13. Vorrichtung nach einem der Ansprüche 1 bis 12, dadurch gekennzeichnet, daß der Querschnittswandler (36) aus Lichtleitfasern besteht.

14. Vorrichtung nach Anspruch 12 oder 13, dadurch gekennzeichnet, daß der Querschnittswandler (36) eine kreisförmige Einstrahlfläche (38) und eine Ausstrahlfläche in Form einer Lichtzeile (39) besitzt.

15. Vorrichtung nach einem der Ansprüche 1 bis 14, dadurch gekennzeichnet, daß der Querschnittswandler (36) in Richtung zum Substrat (1) und in der Substratebene senkrecht zur Längserstreckung desselben einstellbar ist.

16. Vorrichtung nach Anspruch 15, dadurch gekennzeichnet, daß die Einstellbarkeit über zwei an den Längsenden des Trägers (40) des Querschnittswandlers (36) angebrachte Kreuzsupporte erfolgt.

P.Prohaska 7

17. Vorrichtung nach Anspruch 16, dadurch gekennzeichnet, daß ein Kreuzsupport aus einer fixen Achse (48) mit einem Feingewinde (49) und einem Rändelrad (50), einem durch das Rändelrad (50) verschiebbaren Führungsblock (51) und einem im Führungsblock (51) senkrecht zur Achse (48) gleitend gelagerten Verstellblock (57) besteht.

18. Vorrichtung nach Anspruch 17, dadurch gekennzeichnet, daß der Verstellblock (57) mit einem Führungsansatz (59) in einer Führungsnut (54) des Führungsblockes (51) verschiebbar und durch einen Gewindebolzen (55) geführt ist.

19. Vorrichtung nach Anspruch 18, dadurch gekennzeichnet, daß auf dem Gewindebolzen (55) eine Schraubendruckfeder (56) vorgesehen ist und als Gegenlager außen eine Stellmutter(60) auf dem Gewindebolzen (55) aufgeschraubt ist.

1/4

Fig. 1

Fig. 2

Fig. 3

2/4  0092175

Fig.4

Fig.6

Fig.5

Fig. 7

Fig. 8

Fig. 10

Fig. 11

Fig. 12

Fig. 13

Fig.9

0092175